# EUROPEAN PATENT APPLICATION

(11) **EP 1 503 329 A2**
(43) Date of publication of application: **02.02.2005**
(21) Application number: 04394045.1
(22) Date of filing: 16.07.2004
(51) Int. Cl.: G06N 5/04

(54) **Method and system for determining whether a situation is logically true or false upon occurrence of an event**

(30) Priority: 28.07.2003 US 627880
(71) Applicant: Kroll, Menahem, Avichayil 42910 (IL)
(72) Inventor: Kroll, Menahem, Avichayil 42910 (IL)
(74) Representative: Brophy, David

(57) **Abstract**

A method and system (10, 50) for determining whether a situation is logically true or false upon occurrence of an event uses conditions associated with the situation in combination with current values of parameters related thereto to create and maintain a database (23) of current thresholds each corresponding to respective limits which characterize the situation and at least one of which is a composite threshold that encapsulates multiple conditions that can be directly compared with a single parameter associated with an event. Responsive to an event, successive parameters associated with the event are compared with respective ones of the current thresholds until either there are no more thresholds to be compared or until it can be definitively established that the situation is logically true or false. Prior to processing a subsequent event, the current database thresholds are updated.

## Description

### FIELD OF THE INVENTION

This invention relates to event-driven systems and, in particular, to the need to ensure the currency of event handling.

### BACKGROUND OF THE INVENTION

Reactive applications relate to a class of applications that are event-driven and configured to operate upon detection of events. The exact timing and content of such events are not usually known in advance. Many tools in different areas have been built to detect events, and to couple their detection with appropriate actions. These tools exist in products that implement active databases, event management systems, the "publish/subscribe" mechanism, real-time systems and similar products. Most current reactive systems respond to a single event.

A known problem in many reactive applications is the gap between the events that are supplied by an event source and situations to which the system is required to react. US Patent No. 6,208,720 (Curtis *et al*.) issued March 27, 2001 and entitled "*System, method and computer program product for a dynamic rules-based threshold engine"* discloses a configurable and scalable rules-based system for processing event records including a core infrastructure and a configurable domain-specific implementation. The domain-specific implementation is provided with user specific data and rules. The core infrastructure includes an event record enhancer which enhances events with additional data and a threshold detector which determines whether an enhanced event record, alone or in light of prior event records, exceeds one or more thresholds. The enhancer can access external databases for additional information related to an event record. The threshold detector selects one or more threshold rules from a database of threshold rules for applying to the enhanced event records. Where enhanced event records are in the form of feature vectors containing features and feature values, the threshold detector selects one or more threshold rules based upon the features or feature values in the vector. Where the feature vector includes a threshold for a feature value, the threshold detector tests the feature values against the threshold. The threshold detector may access prior event records in order to apply one or more threshold rules.

Such a system employs an external database that is used by the thresholding engine, and is used to store threshold rules that may be modified dynamically during run-time. The threshold detector receives enhanced event records and selects one or more threshold rules from the threshold database. The threshold rules indicate how the thresholding engine must react to specified events. For example, a system for detecting telecommunication fraud may require that event records be monitored in order to detect when a threshold has been exceeded. The event could be calling a targeted telephone number and the threshold could be set to a number of calls so as to warn an operator when more than this threshold number of calls is made to the targeted telephone number. Thus, although the threshold extracted from the database sets a limit to a specific even it does not constrain the event in any way. That is to say the event of dialing the targeted telephone number occurs regardless of the threshold and it is only after the event has occurred that correlation with the database is required, in order to determine whether the event is significant or not.

In the world of banking, the need to prevent fraud is of major concern. Money may be withdrawn in real time from a customer's account in different ways, of which examples are: by way of ATMs where the customer uses a card to withdraw cash; at points of sale where the customer pays for goods using a credit card; and by way of requesting a cash withdrawal manually from a bank teller. In all such cases, a decision has to be made whether the intended use of the credit card is genuine and/or whether there are sufficient funds in the customer's account to cover the transaction. These decisions are made by processing data stored in the bank's or financial institution's central computer(s) to which the bank's terminals, (internal computer workstations and external ATMs), as well as terminals and computers of other financial intuitions, merchants and customers, are connected. In practice, tens of thousands of terminals are connected to one or more central bank computers worldwide and thousands of transactions are carried out substantially simultaneously 24 hours around the clock.

This places a very high onus on the bank's computers since a decision whether to honor or reject a transaction must be made in a matter of several milliseconds. Once made, the decision is irreversible. A wrong decision means an irrecoverable loss of money to the bank..

When a credit card is stolen, there is always a window of opportunity for a thief, before the card's loss is noticed by the true owner and reported to the credit card company, to undertake fraudulent transactions. Typically a thief does not know the credit rating associated with the card and initially attempts to withdraw a large sum. If this is rejected because it exceeds the card's credit rating, then the thief will progressively lower the value of the attempted withdrawal until the request is passed. Once the credit card is invalidated for any reason, further fraudulent (and genuine) transactions will of course be blocked. But in conventional anti-fraud systems an initial fraudulent transaction will often be approved and it is only when such a transaction is spotted by the true credit card owner or by sophisticated analysis tools that a block will be put on the card. The reason for this is that it is impossible using conventional approaches to process all the relevant validity criteria needed to establish fraud in the several milliseconds available. Therefore, unless the card were invalidated prior to the transaction, the transaction will typically be approved and irreversible damage may be done.

The only known alternative is to invalidate all transactions that cannot categorically be approved in the small time frame available. This approach is unacceptable because many valid transactions will be rejected for lack of sufficient processing time.

It would therefore be desirable to provide an improved method and system for analyzing event-driven criteria in order to establish whether a situation meets predetermined conditions immediately upon occurrence of an event, as an activity which is part of the initiation or execution of the "real world" event, and prohibit the continuation of the event if such conditions are not met.

### SUMMARY OF THE INVENTION

It is an object of the invention to provide an improved method and system for analyzing event-driven criteria in order to establish whether a situation meets predetermined limits upon occurrence of an event.

It is a particular object of the invention to provide such a method and system that permit financial transactions to be processed sufficiently quickly that they can be approved or rejected in real time.

Such an objective is realized in accordance with a first aspect of the invention by a method for determining whether a situation is logically true or false upon occurrence of an event, said method comprising:
using conditions associated with said situation in combination with current values of parameters related to said conditions to create a database of current thresholds each corresponding to respective limits which characterize the situation and at least one of which is a composite threshold that encapsulates multiple conditions that can be directly compared with a single respective value of a parameter associated with an event;
responsive to an event, comparing successive parameters associated with the event with respective ones of the current thresholds until either there are no more thresholds to be compared or until it can be definitively established that the situation is logically true or false; and
prior to processing a subsequent event, updating the current thresholds in said database.

Thus, the invention allows determination as to whether a situation is logically true or false by minimizing the amount of processing that needs to be performed upon occurrence of an event in order to establish whether the situation is logically true or false. This is achieved by pre-processing the thresholds so as to compute at least one composite threshold that may be compared with the instantaneous value of a respective parameter at initiation of the event, and updating such threshold(s) immediately after each event is processed, in preparation for the next event,. For example, in the case of a financial transaction, the composite threshold may relate to an amount of cash (a single number) that a customer is authorized to withdraw at a given time and may be based on multiple thresholds such as a maximum permitted daily sum and a maximum permitted monthly sum. Since only a single composite threshold need be compared with the amount of the requested cash withdrawal, rather then successively establishing that the requested cash withdrawal exceeds neither the daily nor the monthly limit, such an approach minimizes the number of comparisons that need be made and shortens the time required to establish whether the transaction may be authorized or not. It should be noted that part of the efficiency is accomplished by the fact that the database updates occur after the approval/rejection, while the card is blocked, thus preventing subsequent transactions. The database updates must occur before next transaction, but these are slower, time consuming operations, and deferring them has significant value.

Within the context of the invention and the appended claims the terms "synchronous" and "asynchronous" are defined as follows. "Synchronous" relates to any action that is triggered by an event so that it is performed directly upon initiation of the event, and is part of the execution of the event. That is to say, the event cannot be complete unless all synchronous actions that were triggered by it are also complete. "Asynchronous" relates to any action that is triggered at any time in the life of an event (initiation, termination), and which is executed independently of the triggering event, and may continue after the triggering event/transaction is completed. The triggering event is not dependent on the completion of asynchronous actions for its own completion. In the case that the invention is used within a system for authorizing financial transactions, the asynchronous action is triggered immediately after the transaction is authorized/rejected, so that it is performed directly upon establishing whether the situation is logically true or false.

In effect such an approach establishes asynchronously a set of binary thresholds that allow synchronous true/false comparison of external "real world" parameters so as to quickly determine whether a situation has occurred or not. In order to understand how such an approach is faster than convention approaches, consider its use in the context of fraud analysis, where the situation relates to the condition that a bank customer is authorized to spend up to $100 per day on his credit card up to a maximum of $500 per month. Suppose the customer uses an ATM to withdraw $50 on the tenth of the month. In a conventional system, the cash withdrawal is first compared with the permissible daily limit. In this case, it is less than the maximum allowed sum. But this on its own does not establish that the transaction is valid since the cumulative cash sum withdrawn prior to the tenth of the month may exceed $450, in which case the transaction is invalid. Thus, in this very simple example, two independent comparisons must be made.

In the invention, for the first cash withdrawal during the month, regardless of when it occurs, a single limit of $100 is set since any financial transaction less than or equal to this sum is valid and may be authorized. Once the customer withdraws any sum, for example, $50, the threshold is adjusted asynchronously to $50 since, up until midnight of the same day, this is the maximum allowable limit that may be allowed. After midnight, the threshold reverts to $100 since the customer has so far spent only $50 and therefore since the $500 limit is not exceeded, he may again withdraw $100 the following day. Suppose that after his first withdrawal of $50, he now makes four more $100 withdrawal during the month. Each of these transactions will be valid since the requested sum is, in each case, less than or equal to the remaining threshold. After the fourth withdrawal, he has thus withdrawn in total $450 and the threshold is now set asynchronously to $50. Upon subsequent midnights during the current month, the threshold will remain $50, and will not be reset to $100. However, at midnight at the start of the new month, the threshold will again be set to $100 and the cycle will repeat.

It will thus be noted that in this very simple example, only a single comparison need ever be made, thus halving the number of comparisons required in equivalent conventional systems. Of course, in practice, events can be much more convoluted and require possible successive comparison of multiple thresholds, but since many of these conditions are composite conditions, and are updated asynchronously to provide respective current composite thresholds, a much smaller number of synchronous comparisons and tests need to be made since the cumulative or historical data associated with those thresholds need not be analyzed synchronously.

One principal distinction over hitherto-proposed systems is as follows. In known systems, multiple conditions that require an event parameter to lie within corresponding thresholds in order to establish whether an event has occurred must each be computed separately. Moreover, cumulative or historical data associated with thresholds must be analyzed before it can be determined whether a situation is true or false and this is time-consuming and not amenable to synchronous processing. On the other hand, in the invention, multiple conditions are preprocessed, prior to every event, in order to establish a single composite threshold that requires much fewer comparisons in real-time upon occurrence of an event. After each event, recent data and historical data are processed asynchronously in the background, but immediately, (in other words - on-line, but not synchronously) and prior to the next event as opposed to, say, daily, or every few hours, to update the specific thresholds applicable for the specific client at the specific time and it is only these thresholds that need ever be processed on-line. Furthermore, as time passes after each event, the client-specific thresholds are updated at specific points in time, to reflect any time-dependent changes in the conditions that apply to this client. The invention also flexibly handles time histories of past transactions that affect the next transaction. The invention therefore requires significantly less synchronous processing and even complex situations can be quickly established synchronously.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1** is a block diagram showing a system according to a first embodiment of the invention for filtering high-risk transactions;
**Fig. 2** is a block diagram showing a system according to a second embodiment of the invention for filtering high-risk transactions;
**Figs. 3a and 3b** are a flow diagram showing the principal operating steps carried out by the systems shown in Fig. 1 and 2;
**Fig. 4** is a graphical representation showing how the invention computes boundary conditions based on geographical information of a card owner.

### DETAILED DESCRIPTION OF THE INVENTION

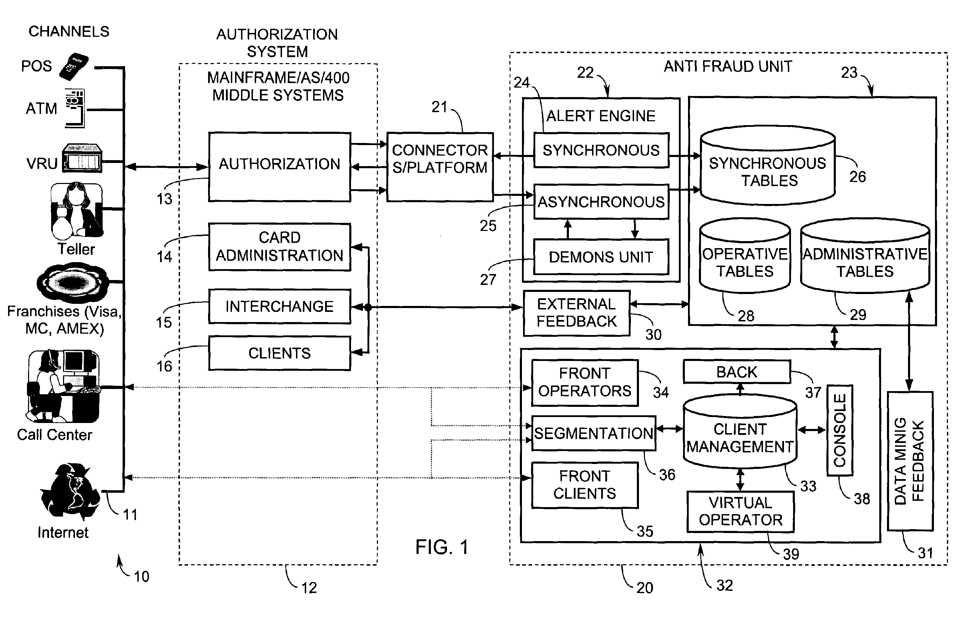

Fig. 1 is a block diagram showing a system depicted generally as 10 according to a first embodiment of the invention for filtering high-risk transactions. Multiple channels 11 are connected to an authorization system 12 the heart of which is a computer, adapted to serve multiple satellite terminals simultaneously. The authorization system 12 includes an authorization unit 13 to which a transaction, Tx, is conveyed from one or more of the channels. Transactions are typically carried out via ATMs, point-of-sale terminals and bank teller terminals. However, in addition, the channels 11 also allow for transactions to be initiated via the Internet. Typically, transactions arriving at the authorization unit 13 must be processed and a response indicative of either acceptance or denial of service must be returned within several milliseconds.

The authorization system 12 further includes a card administration unit 14, an interchange unit 15, connected to external financial institutions, such as international exchange, and a client unit 16 each of which effects parallel processing of specific data related respectively to the card administration, the source of the transaction and client information. An anti-fraud unit 20 is coupled to the authorization system 12 via a connector 21 and receives therefrom data in a uniform format. To this end, the connector 21 includes a protocol converter for converting the known data protocols from all the various terminals constituting the multiple channels 11 to a single, standard format. Thus, by the time the data reaches the anti-fraud unit 20, all data conforms to a standard file format.

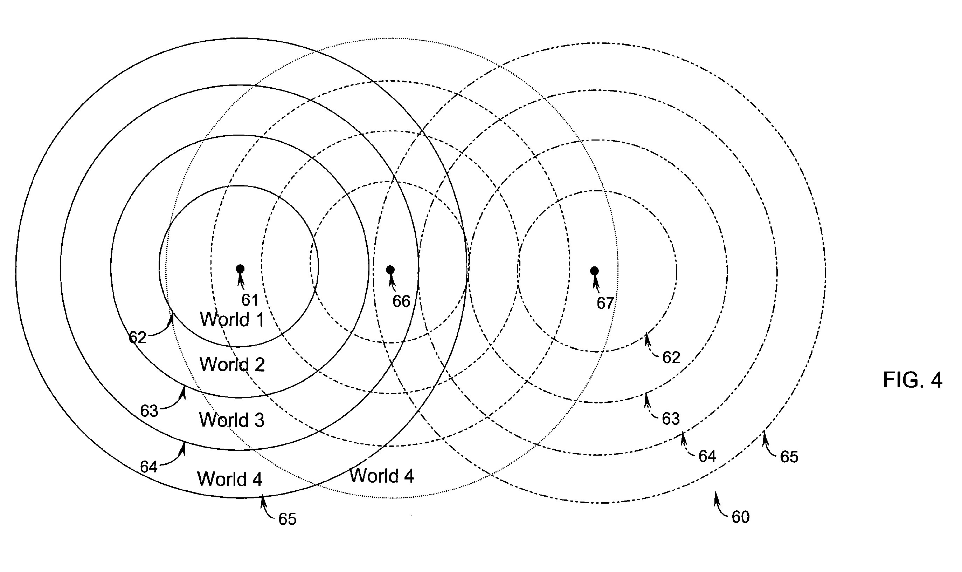

The anti-fraud unit 20 includes an alert engine depicted generally as 22 coupled to a database shown generally as 23. The alert engine 22 processes the incoming transaction data to flag the transaction as fraudulent if it is considered as high-risk based on simple threshold comparisons that will be described in more detail below. To this end, the alert engine 22 includes a synchronous processor 24 and an asynchronous processor 25 both coupled to synchronous tables 26 in the database 23. The synchronous tables 26 store thresholds that are used by the synchronous processor 25. The asynchronous processor 25 operates upon completion of synchronous processing to re-calculate asynchronously new thresholds that are used to update the synchronous tables 26. Data is processed asynchronously in three ways: (i) immediately after approving or rejecting a transaction to compute new thresholds that are used by the synchronous processor 24; (ii) in batch mode when the database is updated in respect of specified clients or behavior patterns; and (iii) in response to time-triggered events at specific times following each transaction. To this end, there is coupled to the asynchronous processor 25 a demons unit 27 that responds to time triggers issued by a real-time clock for recalculated thresholds. One example that is described in greater detail below with particular reference to Fig. 4 is the time-triggered re-calculation of a client's "geographical world" based on the location of a previous transaction.

During the operation of the asynchronous processor 25 that immediately follows a transaction, the card is blocked thus preventing use thereof directly after issuing a first transaction until all thresholds are re-calculated and the database 23 updated accordingly.

By such means, the invention achieves higher security than hitherto-proposed approaches, because it can validate more conditions in real time, with less processing overhead than has been previously required.

The database 23 further includes operative tables 28 and administrative tables 29. The operative tables 28 store algorithms, formulae and parameters that are used by the asynchronous processor 25 to calculate thresholds such as, for example, each client's boundary conditions such as his or her legitimate geographic world as will be explained in more detail below with reference to Fig. 4 of the drawings. Storing these data in the operative tables 28 obviates the need to hard-code the data in the asynchronous processor 25 and makes for easier maintenance of the code and the associated data as well as simpler addition of new algorithms and data if required. The administrative tables 29 store relatively stable information and conditions that influence the real time updates of each client's boundary conditions, such as clients' profiles and segmentation data as defined below.

The database 23 is also coupled to an external feedback unit 30 in the anti-fraud unit 20, which is coupled directly to the interchange unit 15 in the authorization system 12. The external feedback unit 30 serves to obtain additional information, from other systems, about cardholders and merchants that complements the data available to the anti-fraud unit 20 from the transactions that it processed on its own. This information aids in the definition of clients' and merchants profiles and fraud tendencies. For example, an external analysis may determine that cards that were issued or delivered by a certain contractor have a higher likelihood of fraud. The external feedback unit enables the anti-fraud unit to process this knowledge and incorporate it into the validation of all cards handled by same contractor. It also allows the anti-fraud unit 20 to convey information about clients and merchants to the authorization system 12 beyond the acceptance or rejection of individual transactions. Likewise, a data mining feedback unit 31 in the anti-fraud unit 20 is coupled to the administrative tables 29 in the database 23 and permits data therein to be updated based on independent data mining. The data mining feedback unit 31 performs background analysis of the information contained in the database for fine-tuning the clients' behavior patterns and fraud tendencies. For example, even though transactions are approved, it may be found on analysis of the data in the database that transactions conducted by a certain business during specific hours are subject to a statistically abnormal incident of fraud. This conclusion clearly cannot be made based on only one or two transactions that are approved but are later denied by the card-holder, but must be made on post-analysis of many transactions. In such case, transactions made during these specific hours from the suspect business may be blocked, by establishing a global boundary condition that obviates the need for further processing based on the identity of the cardholder.

It has been noted that very little time is available for approving or rejecting financial transactions. This means in practice that there may be insufficient time to establish unequivocally that a transaction is not fraudulent. In such cases different policies may be established for determining what to do: for example, transactions that exceed a certain threshold and are "questionable" may be rejected; while "questionable" transactions that are less than a certain threshold may be approved. But in either case, external feedback is required in order to establish asynchronously whether the action were correct.

To this end, one of the channels 11 is a call center that is manned by the financial institution and permits a human operator to query a card-holder in order to determine whether a transaction that was just attempted using his card were genuine. If the transaction was incorrectly blocked, corrective actions may be taken to enable a second attempt to pass. If the transaction were fraudulent, then of course, remedial action can be taken, depending on whether the transaction was approved or not, at the very least by way of blocking the card against further use since it may have been stolen. Likewise, on-line purchases over the Internet may require direct validation of the customer's credit card. To this end, the call center and the Internet may be directly coupled to an on-line processor 32 that allows parallel processing of on-line data and maintains its own client management database 33 coupled to a front operators unit 34 connected to the call center, to a front clients unit 35 connected to the Internet and to a segmentation unit 36 that is connected to both the call center and the Internet.

The segmentation unit 36 stores data relating to sub-profiles that are related to the client. For example, more than one credit card may be issued in respect of a single bank account, relating to the principal customer, his or her spouse, and possibly children. In such case, transactions carried out using any one of these credit cards must be correlated to the same account and any boundary conditions associated therewith will, of course, need to be applied to all transactions carried with any one of the credit cards. Moreover, different card holders associated with the same account may also have different behaviors that must be stored separately and which must be processed in order to compute respective current thresholds for each card-holder. For example, a child may have a credit limit of $10 per day and may further be limited to spending this sum on a video or hamburger.

In addition to such predetermined allowed behavior, which the system must enforce, a behavior pattern may also be determined during actual use of the card, and a deviation from this pattern may then serve as an indicator of a fraudulent transaction. For example during regular use of the card by a child it may be determined that he buys a hamburger at the local mall between 13:00 and 14:00 Mondays to Fridays and on Saturday night hires a video, and withdraws a small amount of cash from an ATM. If then a transaction arrives for a cash withdrawal on a Monday morning at 6:00AM, it will be suspect and possibly be subjected to rejection or to further investigation. a. Segmentation information and detected behavior patterns are stored and associated with the card and/or client.

The client management database 33 is further coupled to a back unit 37, to a console 38 allowing operator interaction, and to a virtual operator 39. These units serve to establish a client profile based on past behavior. Consider, for example, a client who makes all his ATM cash withdrawals during the day. This information establishes a profile for the client. If now the client appears to deviate from this set pattern, and withdraws money from an ATM at night, a warning flag is immediately raised. Of course, his transaction is not invalidated on that account for there may be many perfectly legitimate reasons why he is making a transaction at a different time of day: but the deviation may nevertheless be important in establishing a high probability of fraud when taken in conjunction with other factors. The front operators unit 34 defines essential conditions for establishing when a transaction does not meet specified criteria and may be fraudulent, thus raising an alert. Of course, not all alerts are indicative of actual fraud. The virtual operator 39 operates in conjunction with the front operators unit 34 and assesses whether alerts flagged by the latter requires human intervention. Event management software checks and filters all such alerts before human operators perform manual sorting and checking.

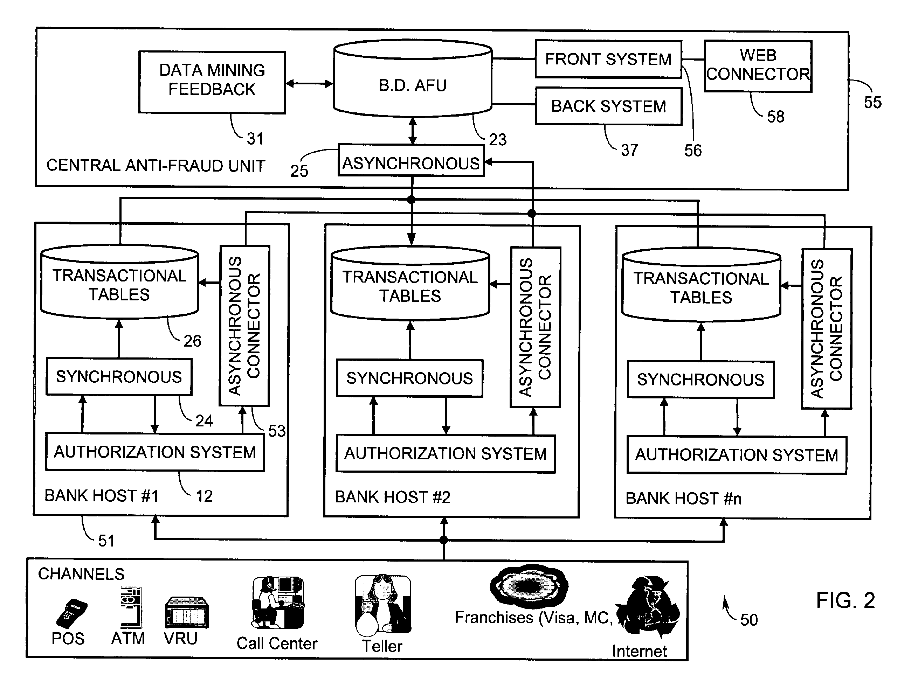

Referring now to Fig. 2, a system 50 is shown according to a second embodiment of the invention. To the extent that both systems include overlapping components, identical reference numerals will be used. Thus, the system 50 includes the same multiplicity of channels 11 as shown in Fig. 1 all of which are connected in parallel with a plurality of bank host computers designated #1, #2 ... #n and each referenced 51 since they are, so far as is relevant to the invention, functionally identical. Each bank host computer 51 includes an authorization system 12 that operates in similar manner to that shown in Fig. 1. Additionally, each bank host computer 51 includes distributed components of the alert engine 22 shown in Fig. 1. Specifically, there are coupled to the authorization system 12 in the bank host computer 51 a synchronous processor 24 connected to a synchronous table 26, which in turn is coupled to an asynchronous connector 53 and operates as described above with reference to Fig. 1 of the drawings.

Thus, the asynchronous processor 25 shown in Fig. 1 is not part of the bank host computer 51 but is instead provided in a central anti-fraud unit 55 to which all of the bank host computers 51 are coupled. Specifically, the asynchronous processor 25 in the central anti-fraud unit 55 is coupled to each asynchronous connector 53 as well as to the synchronous table 52. The asynchronous connector 53 thus serves to couple the bank host computers 51 to the central anti-fraud unit 55 and to provide necessary data protocol transfer between the authorization system 12 and the central anti-fraud unit 55.

The central anti-fraud unit 55 further includes a data mining feedback unit 31 coupled to a bank database (BD) designated as 23 since it parallels the database referenced by the same number in Fig. 1 and contains the same synchronous tables, operative tables and administrative tables shown therein. Also included in the central anti-fraud unit 55 are a front system 56, a back system 37 and a web connector 58.

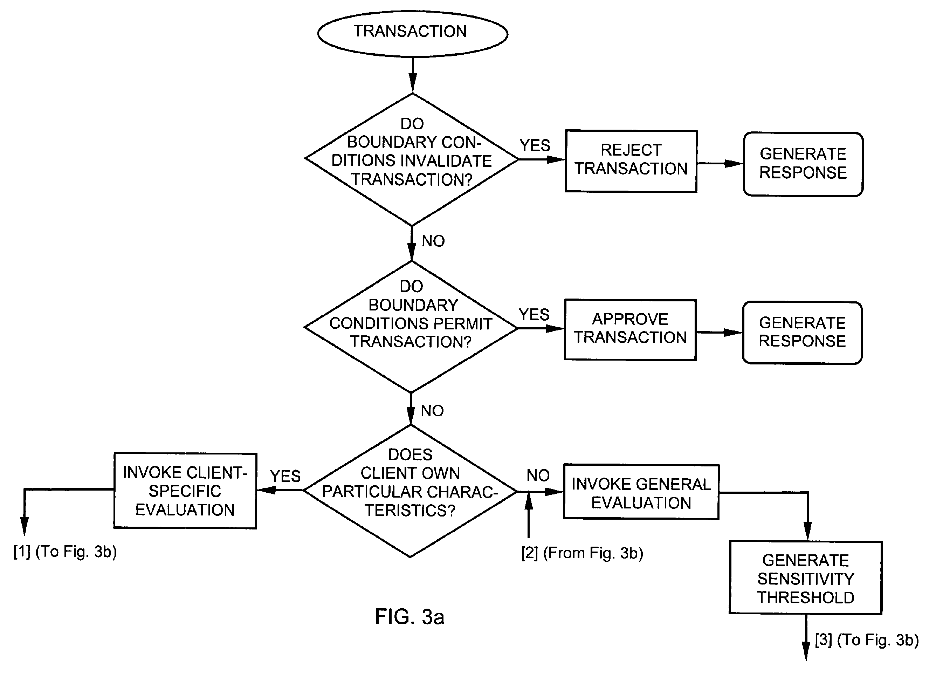

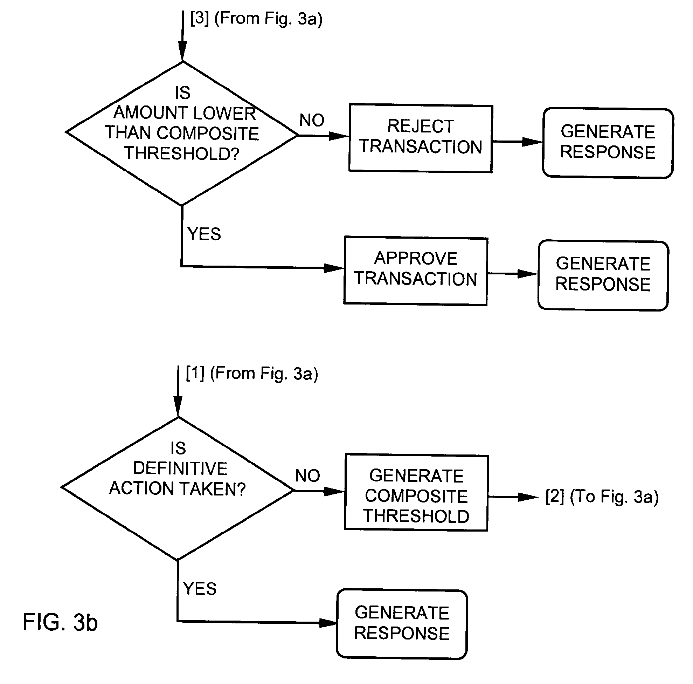

The principal fraud detection component of both the systems 10 and 50 shown in Figs. 1 and 2 is the synchronous processor 24, which performs synchronous processing of a transaction by checking the synchronous tables 26 in order to determine within a matter of milliseconds whether the transaction should be approved valid. The manner in which this is done will be described below with reference to Fig. 3 of the drawings. Thereafter, the transaction data is forwarded to the asynchronous processor 25 in the anti-fraud unit 20 or 55 so that thresholds contained in the synchronous tables 26 or the synchronous table 52 may be recomputed and updated. To this end, the asynchronous processor 25 is directly coupled to the synchronous tables 26 shown in Figs. 1 and to the synchronous table 52 in Fig. 2.

Referring now to Figs. 3a and 3b operation of the synchronous processor 24 will be described. Upon a transaction reaching the synchronous processor 24, thresholds in the synchronous tables 26 corresponding to boundary conditions are compared with corresponding parameters in the transaction data in order to determine whether there exist boundary conditions which in themselves are out of range. For example, a global boundary condition can be set that invalidates any transaction whose value exceeds a pre-defmed threshold, e.g. anything over $1M.

If the transaction passes this initial boundary check, it is subject to another kind of boundary check that is used to validate transactions based on its parameters being within range of specified boundary thresholds. For example, it may be decided to pass any transaction whose value is less than $25 without incurring the computational and time overhead of further processing. Similarly, it may be decided to pass all transactions carried out in certain establishments, such as clinics or hospitals based on statistical analysis of past transactions from such locations that were found to be uniformly valid. Transactions that meet this boundary check are automatically approved and a suitable response is generated and conveyed by the synchronous processor 24. Subsequent asynchronous processing will handle, among others, the situation where this approval was incorrect, possibly by blocking the card entirely.

If the transaction does not pass this broad (positive) boundary check, the current transaction is then tested against the conditions set previously for the next transaction, by the asynchronous processing that followed the previous transaction. Transaction-specific evaluation is now invoked. Such evaluation is done against boundary conditions such as the geographical location of the client when the transaction is initiated. For example, if the client performed a transaction on a particular day in London, then it may be asserted that a subsequent transaction carried out within 30 minutes must be somewhere also in London. If, in fact, a transaction is attempted 15 minutes later from New York it can immediately be identified as fraudulent, as explained in greater detail below with particular reference to Fig. 4. So the location of a valid transaction may serve to define a boundary condition that varies with time and may be updated asynchronously. Likewise, transaction-specific boundary conditions may include the maximum amount that may be withdrawn, as described above in the discussion of the composite conditions. Transactions that fail these transaction-specific tests are rejected and a suitable response is generated and conveyed by the synchronous processor 24.

In addition, a general evaluation is invoked whereby all parameters are evaluated to generate a sensitivity or risk factor. For example, if multiple transactions are attempted with a given card, with successively decreasing amounts, all of which were rejected for various reasons (including exceeding of account limits) the risk factor for the card may be increased, as the behavior may be indicative of a thief trying to discover the limits on the account. Increasing the risk factor, in this case, assists the anti-fraud unit 20 in evaluating subsequent transactions for the same card (including those which are within the allowed limits) , without making an arbitrary decision to block the card. Although assigning risk "points" to a transaction or customer in order to raise alarm, is known *per se,* it has not been proposed previously to feed it into the very next transaction.

Fig. 4 is a graphical representation of a dynamic geographical threshold denoted generally as 60 showing how the invention computes boundary conditions based on geographical information of a client. Points denoted by 61, 66 and 67 designate the geographical location and time-origin for three distinct transactions. Once a transaction is performed, the next transaction is first allowed to be executed only from same location. As time passes, the geographical scope of places from which a genuine next transaction may arrive expands. The location of the first transaction defines an instantaneous world 62 denoted "World 1" establishing geographical boundaries from which the client can legitimately perform a transaction for a given period of time. This world may be represented by a list of countries. Alternatively, it may include other geographical parameters readily associated with each transaction. Thus, as explained above, if the card were used on a particular day in London, then it may be asserted that a subsequent transaction carried out within one hour must be somewhere in the UK. So the boundaries of World 1 will be confined to all places in the UK for a time period of one hour. After one hour in which no transactions are performed, the client's world of allowable countries may be expanded to all the countries in western Europe; after two hours, all the countries in Europe and north Africa may be added; after 5 hours the middle east and the USA may be added; and after 7 hours, say, the entire globe may be included. So the client's geographic location for any given transaction may be used to trigger a series of expanding "worlds" of which four are denoted 62, 63, 64 and 65 and labeled respectively World 1, World 2, World 3 and World 4. These "worlds" define geographical boundaries, which the client can legitimately inhabit for a given period of time and are continually determined and updated asynchronously by the asynchronous processor 25, updating the allowed geographical location of the next transaction. The boundaries of the world are changed asynchronously by the demons unit 27 automatically, and always remain as simple conditions (such as a single lookup of country in a list of allowable countries), without the need to calculate distances and travel times for approvals. The demons unit 27 applies periodic time-based triggers for re-calculating the client's world based on a previous known location. Thus, whenever a client uses his card, his present location, given as one or more geographical parameters (e.g. country) is tested directly against the allowable geographical world without further calculations.

As shown in Fig. 4, some time later at a time origin denoted by 66, the user makes a second transaction from a location somewhere in World 3 as defined for the first transaction. This stops the expansion of the first series of worlds (based on time origin 61) and triggers the creation of a new set of worlds centered on the client's physical location at time origin 66. Some time later at a time origin denoted by 67 the user makes a third transaction from a location somewhere in World 4 as defined for the first transaction, which restarts the time-driven expansion of a series of worlds.

In addition to the geographic boundaries that are constantly recalculated after each transaction, the system also maintains time-histories based on previous transactions. For example, the history of the transactions of the last hour, the history of the transactions of the last day, of the last week and the last two weeks. Commonly, the time-histories are reset at the beginning of a calendar month, but within the month the time-histories of each client are constantly shifting, shrinking and expanding. Client-specific rules determine how the transactions of each such time-history affect decision-making regarding the next transaction. Demon processes update the content of each time-history, drop aging transactions from that time-history, and shift forward the boundaries of the time-history. Additionally, the length of the time-history may vary from one client to another by random or arbitrary factors, so as to reflect certain risk factors, as well as to hide such boundaries from a potential thief. Thus a time range of one hour, or 3600 time units (seconds in the standard case), may be shrunk or expanded, by a factor, say between 0.8 and 1.2, becoming less or more than a clock hour in the real world. New transactions are analyzed relative to the previous transactions in each of the time-histories, during the asynchronous processing, subject to different, client-specific rules. The behavior of the customer in each time-history is analyzed, resulting in new conditions for subsequent transactions. Such new conditions from multiple time-histories are consolidated into composite conditions for synchronous processing.

It will be apparent to those skilled in the art that there are many variations on the parameters used to determine global and client-specific conditions and the description is therefore exemplary. The essential novelty and advantage of the invention resides in the processing being split into an on-line synchronous component that is performed in real-time using relatively simple composite synchronous conditions, and an asynchronous component that is performed for each transaction immediately following the synchronous processing and is used to update the synchronous conditions prior to the next transaction without burdening the synchronous processing of transaction data. By such means, much of the heavy real time processing is avoided and the speed of synchronous processing is greatly enhanced, thus reducing the response time for an individual transaction to an acceptable level. Another significant benefit of the invention as described in the preferred embodiment, is that asynchronous updating of the synchronous thresholds is performed continuously at specific times relative to the last transaction and based on specific parameters related to behavior of the client, so as to take into account the constantly changing "world" of the client, and what may or may not be allowed at any given time. However, a less sophisticated system might suffice with asynchronously updating the synchronous thresholds only after each transaction.

It will also be appreciated that the geographical boundaries that the client can legitimately inhabit after each transaction may be determined using other approaches without departing from the scope of the invention. Although several approaches have been described, the actual manner in which this is done will depend on the geographic information obtained upon execution of a transaction. Thus, if only country data is associated with a transaction, a list of countries that may accommodate the user at subsequent time intervals may be compiled. Upon execution of a subsequent transaction, the new country data associated with the new transaction is compared with the list in order to determine that it appears therein. This is very fast and avoids the need for real-time pre-processing of the country data associated with a previous transaction and the elapsed time in order to assess whether or not the new country is valid.

However, a more general embodiment could use longitude and latitude data, or other global coordinates, if such were associated with each transaction, and then at successive time intervals following a transaction, spatial coordinates of an area that could validly accommodate the user can be calculated asynchronously and used to update the synchronous tables.

It will also be understood that the system according to the invention may be a suitably programmed computer. Likewise, the invention contemplates a computer program being readable by a computer for executing the method of the invention. The invention further contemplates a machine-readable memory tangibly embodying a program of instructions executable by the machine for executing the method of the invention.

## Claims

1. A method for determining whether a situation is logically true or false upon occurrence of an event, said method comprising:
using conditions associated with said situation in combination with current values of parameters related to said conditions to create a database (23) of current thresholds each corresponding to respective limits which characterize the situation and at least one of which is a composite threshold that encapsulates multiple conditions that can be directly compared with a single respective value of a parameter associated with an event;
responsive to an event, comparing successive parameters associated with the event with respective ones of the current thresholds until either there are no more thresholds to be compared or until it can be definitively established that the situation is logically true or false; and
prior to processing a subsequent event, updating the current thresholds in said database.

2. The method according to claim 1, further including blocking response to, or rejecting, subsequent events pending completion of updating the current thresholds in the database.

3. The method according to claim 1 or 2, wherein the successive thresholds are compared according to a predetermined hierarchy so parameters are processed in progressively decreasing orders of importance.

4. The method according to any one of claims 1 to 3, wherein the event is associated with a transaction that must be authorized prior to completion and the method includes comparing at least one parameter with a corresponding boundary threshold and rejecting the transaction if the at least one parameter either does or does not pass the corresponding boundary threshold.

5. The method according to claim 4, wherein the at least one parameter relates either to (i) a location from which a transaction is performed and the corresponding boundary threshold is a composite threshold that relates to a geographical boundary within which the transaction may be authorized; or to (ii) a monetary value and the corresponding boundary threshold relates to a monetary value that may be authorized.

6. The method according to any one of claims 1 to 5, including computing at least one of said thresholds in response to triggers generated by a real-time clock, the real time clock being set or otherwise modified in response to said events.

7. The method according to any one of claims 1 to 6, further including updating the current thresholds based on external information.

8. The method according to any one of claims 1 to 7, wherein at least one of said thresholds relates to a geographical location from which a subsequent event may be validly initiated.

9. The method according to any one of claims 1 to 8, including generating one or more time-histories each relating to events originating at a specific time range prior to a subsequent event and using said time-histories to update the threshold for the subsequent event.

10. The method according to claim 9, wherein the boundaries of the time histories vary from client to client randomly or arbitrarily.

11. A system (10, 50) for determining whether a situation is logically true or false upon occurrence of an event, said system comprising:
a database (23) of current thresholds each corresponding to respective limits which characterize the situation and at least one of which is a composite threshold that encapsulates multiple conditions that can be directly compared with a single respective value of a parameter associated with an event;
a synchronous processor (24) responsive to an event for comparing successive parameters associated with the event with respective ones of the current thresholds until either there are no more thresholds to be compared or until it can be definitively established that the situation is logically true or false; and
an asynchronous processor (25) responsive to the event for updating the current thresholds in said database prior to processing a subsequent event.

12. The system according to claim 11, wherein the synchronous processor is adapted to block response to subsequent events pending completion of updating the current thresholds in the database.

13. The system according to claim 11 or 12, wherein the synchronous processor is adapted to compare successive thresholds according to a predetermined hierarchy so parameters are processed in progressively decreasing orders of importance.

14. The system according to any one of claims 11 to 13, wherein the event is associated with a transaction that must be authorized prior to completion and the synchronous processor is adapted to compare at least one parameter with a corresponding boundary threshold and to reject the transaction if the at least one parameter either does or does not pass the corresponding boundary threshold.

15. The system according to claim 14, wherein the at least one parameter relates either to (i) a location from which a transaction is performed and the corresponding boundary threshold is a composite threshold that relates to a geographical boundary within which the transaction may be authorized; or to (ii) a monetary value and the corresponding boundary threshold relates to a monetary value that may be authorized.

16. The system according to any one of claims 11 to 15, wherein the asynchronous processor is adapted to compute at least one of said thresholds in response to a trigger generated by a real-time clock in response to said event, the real time clock being set or otherwise modified in response to said events.

17. The system according to any one of claims 11 to 16, wherein the asynchronous processor is adapted to update the current thresholds based on external information.

18. The system according to any one of claims 11 to 17, wherein at least one of said thresholds relates to a geographical location from which a subsequent event may be validly initiated.

19. The system according to any one of claims 11 to 18, wherein the asynchronous processor is adapted to generate one or more time-histories each relating to events originating from a common time origin and using said time-histories to update the thresholds.

20. A computer program comprising computer program code means for performing all the steps of any one of claims 1 to 10 when said program is run on a computer.

21. A computer program as claimed in Claim 20 embodied on a computer readable medium.
